# EUROPEAN PATENT SPECIFICATION

(11) **EP 2 149 301 B1**
(45) Date of publication and mention of the grant of the patent: **20.11.2013**
(21) Application number: 09166737.8
(22) Date of filing: 29.07.2009
(51) Int. Cl.: A01M 1/02, A01M 1/14

(54) **Automated determining of the presence of insects on a catch plate**
Automatisierte Bestimmung von Insektenanwesenheit auf einer Fangplatte
Détermination automatisée de la présence d'insectes sur une plaque de capture

(30) Priority: 31.07.2008 NL 1035779
(43) Date of publication of application: 03.02.2010
(73) Proprietor: Cropwatch B.V., 6709 PD Wageningen (NL)
(72) Inventor: Heistek, Jolanda Caroline, 2665 VK Bleiswijk (NL)
(74) Representative: Jansen, Cornelis Marinus

(56) References cited:
- WO-A-99/52353
- JP-A- 2003 169 584
- NL-C2- 1 000 096
- US-A1- 2007 169 401

## Description

The present invention relates to a device for determining the number of insects present on a catch plate.

In cultivating spaces such as greenhouses but also in other spaces or even in the open air, it is important to know the conditions under which a crop grows, more generally what the living conditions are of the plants or other living creatures present there. In addition, it is necessary to consider refrigeration cells, the interior of lorries and other means of transportation and the like.

In greenhouses, use is made of what are known as the catch plates in order to register the presence of insects. Catch plates are plates which are provided with a sticky substance comprising baits and aromatic substances and the like to which insects are drawn and then become stuck. Based on the number and the species of insects, it is possible to comment on the number and the species of insects located in the space in question, and increases over time are detemined. Depending on other conditions, such as temperature, season, stage of development of the crop, increase in the number of insects and the like, it is possible then to determine whether particular measures have to be taken. A conceivable manner is the use of (biological) pesticides.

The "reading" of the catch plate demands considerable expertise. Therein, the problem is not so much the counting of the number of insects but rather the distinguishing of the various species of insects. Certain insects are on the whole not harmful while other insects are known not to be desirable in combination with specific crops. In the past, in greenhouses, it has been necessary for an expert regularly to enter the greenhouse and read the catch plates and subsequently offer advice.

In many cases, large numbers of catch plates are present in greenhouses and, as a result of the comparatively high costs associated with the reading, merely limited numbers of catch plates are read under normal conditions.

US 2007/0169401 discloses a device comprising a strip of material which is displaced by rolls on which insects are caught. This strip moves past a camera and the

data obtained thereby are sent to a central processing unit. JP 2003169584 discloses a catching device for insects having two spaced rollers and a sheet moving in between. The back side of the transparent sheet is observed by a camera and signals are sent to a processing unit.

It is the object of the present invention to limit the high costs associated with the reading of catch plates in order in this way to allow even larger numbers of catch plates in greenhouses or other spaces to be read precisely. In addition, it is an object of the present invention to be able to define precisely, from one site to another, the conditions with regard to the infestation by insects and the increase over time and, based thereon, to be able to offer detailed advice as to how countermeasures must be taken in order to eliminate specific insects.

This object is achieved by a combination of a device for determining the number of insects present on a catch plate and a series of catch plates according to Claim 1.

The present invention proposes a device with which it is possible in an automated manner to read off the number and species of insects. This takes place with a camera present in the housing of the device. Once the catch plate has been positioned with respect to the camera, the camera perceives the surface of the catch plate. Based thereon, it is possible to determine the number and species of insects with, for example, vision technologies present in a control and processing unit. These vision technologies can be embodied so as to be fully adapted to the anticipated conditions. The same applies to the conditions prevailing in the housing. Under certain conditions, it is advantageous to attach in the housing separate lighting for illuminating the catch plate, thus allowing the camera to form an accurate image of the catch plate. Therein, use may be made, in particular, of light, specific wavelengths being present in a particularly effective manner. An example of this is the use of infrared light. In addition, measures may be taken to improve lighting with which the insects are perceived. One of the measures is the counteracting of reflection. This can be achieved, for example, by making the part of the housing that is located between the camera and the perception surface thereof matt, as a result of which the light strikes the catch plate, as far as possible, in a diffuse manner, or to make the inner edge of the housing in a light colour, for example white, for effective illumination of the catch plate.

As a result of the independence of the device and catch plate, it is possible to read a number of catch plates using a device. For this purpose, according to the present invention, the device is embodied so as to be particularly easily displaceable and, more particularly, portable. In particular in a greenhouse or else in the field, catch plates are present at various locations. The catch plates are attached in a stand-alone manner. These catch plates are read periodically using a common device so that the device is brought to the catch plate or the catch plates are brought to the device, a catch plate being in all cases introduced into the device and read.

The use of a camera includes the use of a scanner.

Preferably, the device is embodied as an independently functioning device. That is to say, it is provided with a battery so that it can be used at any site in the greenhouse. According to a further particular embodiment, the control/processing unit is provided with a transmitter which can be used to send the result of the observation to a further processing unit. This further processing unit may be a central processing unit which is used for a large number of cultivating spaces and is located at a considerable distance from the device. However, it is also possible to use a local sub-central processing unit, such as a laptop or the like, combining the data from the devices arranged at various sites in the space in question, such as a greenhouse.

If a remote (main) central processing unit is used, this may be a laboratory or the like in which it is possible to offer, starting from the results, advice as to how the conditions must be altered in specific cases.

Thus, it is thus possible to automatically forward, when a specific threshold is exceeded, the test results to an expert, after which this expert offers his advice as to how to proceed. This threshold value is, for example in a greenhouse, dependent on the crop used, the stage of development thereof, the temperature used, the season and the like. If a threshold value is exceeded in this situation, an expert can offer advice with regard to fertilization, use of pesticides and the like. It is also possible to issue a signal immediately in the greenhouse or the like, once the threshold value has been exceeded. Because the present invention allows very early signalling of undesirable situations, it is possible to intervene as soon as a slight increase in the quantity of insects occurs.

Apart from the quantity of insects, it is also possible to examine the species of insects. In particular in greenhouses, use will be made, in the combating of certain vermin, of other insects and it is also important to be aware of the population of the combating insects. In this case, vision software allows selection to be carried out not only based on shape but also based on colour.

The invention is used, in particular, in the production of food, that is to say in agriculture or horticulture and more particularly in greenhouses and/or in the field.

In addition, the software which is used in accordance with a preferred embodiment of the present invention allows a prediction to be made concerning the development of a population. Likewise, the software is embodied in such a way that, even in the event of overlapping parts of adjacent insects, the organisms in question may still be recognized. In this way, it is possible to determine the biological equilibrium and it is possible to intervene as a function of any deviation with respect to that which is deemed to be desirable.

The connection between a laptop, which is present for example in the growing space, for receiving the signals from various devices described hereinbefore may be embodied in a wireless manner. The connection between, for example, a laptop and a main central processing unit can be produced via the Internet. However, other methods of communication are also within the scope of the present invention.

The term "catch plate" refers in this application to any planar part which is provided with a coloured or non-coloured adhesive layer comprising baits and aromatic substances provided to attract insects and to obtain a representative presentation of the insect population present in (or outside) a specific space.

An example of a catch plate of this type is a rectangular plate known in the art.

If this known catch plate is used in combination with the device described hereinbefore, it is desirable to make the catch plate easier to handle as regards the stickiness thereof. It is therefore proposed that this catch plate be provided with a frame strengthening the catch plate. This frame may already be present during the production of the catch plate.

However, it is also possible to attach a frame of this type once the catch plate has caught the insects in questions. As a further variant, it is possible to provide the device with a retractable and extendable "drawer" which functions as a frame. Other possibilities for embodying the catch plate are constructions comprising, for example, a roll of catch plate material which is accommodated so as to rotate (continuously) in the housing of the device and which is attached, for example, directly in the device, but not according to the present invention. In this case, continuous, fully automated monitoring is then provided. In another embodiment, the device according to the invention is provided with an insertion opening into which loose catch plates may in each case be placed. This placement may be carried out by untrained staff. During the placement, properties of the space in question may be input, for example using a keyboard. It is also possible to provide the catch plates with coding, making it clear to which space the catch plate in question belongs. Because catch plates may contain insects on two sides, a further embodiment may have the possibility of turning over (preferably automatically) the plate once it has been introduced into the casing, so that the plate may be inspected on both sides. It is also possible to use cameras on both sides in order to scan the catch plate on either side.

Furthermore, the invention relates to a method for determining a number of insects present at various sites of a space according to claim 12, including defining, at each site using in each case a catch plate processing unit, the number and species of insects, defining, using a scanning, control and processing unit at the site of in each case a catch plate, the information present on the catch plate, sending the information originating from said control and processing unit to a central processing unit, determining in said central processing unit whether a threshold value with regard to the number and/or species of insects is exceeded and issuing a signal when said threshold value is exceeded, which signal comprises the site in said space. Therein, a number of catch plates is used in combination with a single device. Therein, the catch plates can be brought to a central point and be read there with the device, after which the data in question are sent, wirelessly or non-wirelessly, to a central processing point. However, according to a further embodiment, the device is brought in each case to a specific catch plate and read there. This prevents, as far as possible, errors with regard to the position of the catch plate. At the destination site, the location of the catch plate is input, automatically or non-automatically, into the device. Once the data obtained have been read, a gardener, for example, can expect an overview specifying various locations of the growing space with the level of the insect population present at each location. The foregoing may be simplified by using various colours, for example green, amber and red.

The invention will be clarified in greater detail hereinafter based on an exemplary embodiment illustrated in the drawings, in which:
Fig. 1a-c show a catch plate according to the invention;
Fig. 2 is a perspective view of the device according to the present invention;
Fig. 3 is an exploded view of the device according to the invention; and
Fig. 4 shows schematically the application of a number of devices and central processing units.

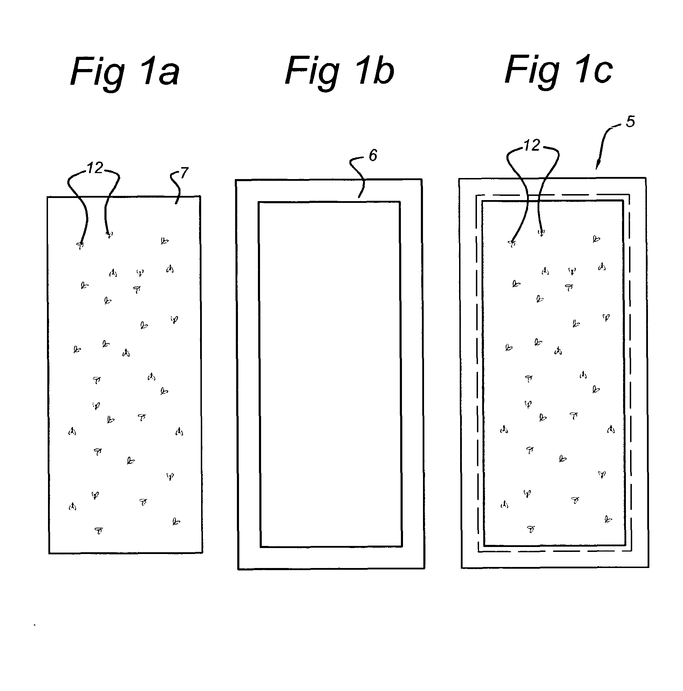

In Fig. 1a, reference numeral 7 denotes the adhesive part of a catch plate 5. This part is provided with adhesive substances, aromatic substances, baits and further substances which are conventional in the prior art and draw insects 12 toward the catch plate 5. The sticky character of the plate traps the insects. Based on that which is located on the catch plate 5, it is possible for experts to comment on the population of the population of insects present in the space where the catch plate is arranged.

Fig. 1b shows a frame 6. As may clearly be seen from Fig. 1c, this frame 6 is combined with the adhesive part 7, producing the catch plate 5. The catch plate is easy to handle.

After all, the frame part does not have the sticky properties which the adhesive part 7 has and is therefore easy to grip and to let go of again.

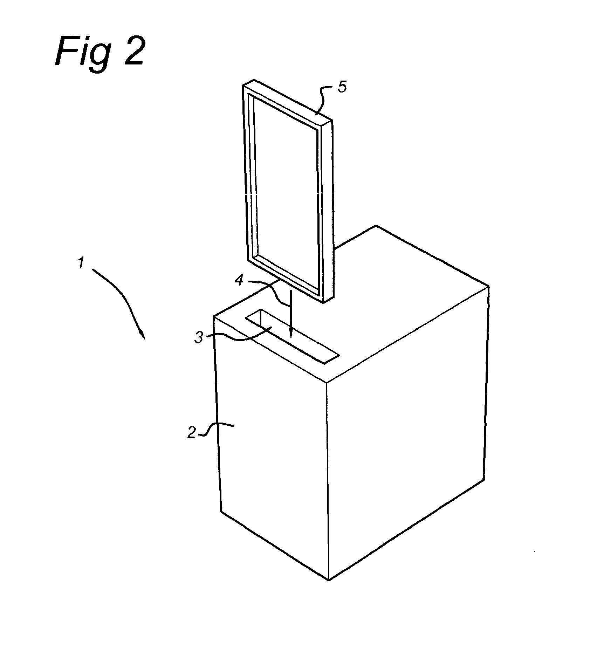

In Fig. 2, the device according to the present invention is denoted in its entirety by reference numeral 1. The device consists of a housing 2 having an insertion opening 3 formed in proximity to the free end delimitation of the upper side. The insertion opening is embodied for receiving a catch plate 5 which is moved through the opening 3 in the direction of arrow 4. Optionally, there is a display on which data may be read.

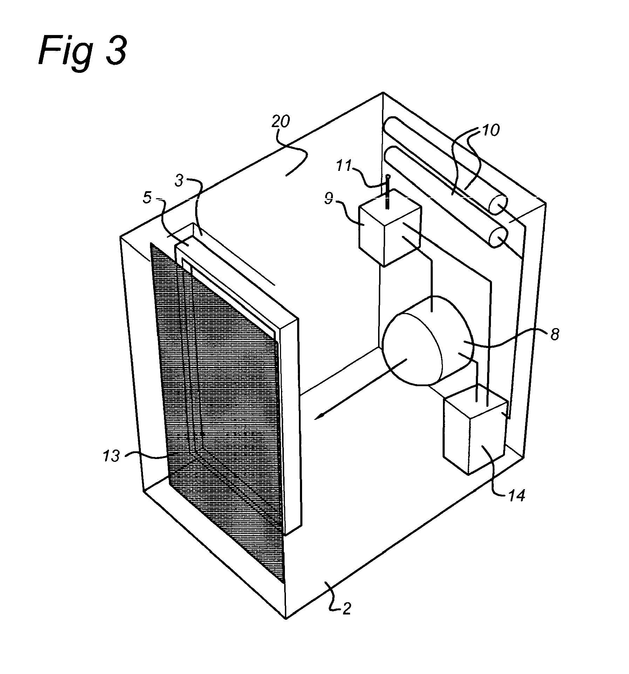

Fig. 3 is an exploded view of the device 1 according to the present invention. Below/after the insertion opening 3 is an observation surface 13 before which the catch plate 5 in question is slid. A camera 8 is located in proximity to the other, opposing side of the housing. In particular, this is a camera which is sensitive to infrared radiation. A device 10, which illuminates the observation surface or the catch plate 5 respectively, is located above the camera 8. The walls bridging the space between the catch plate 5 and the lighting part are denoted by reference numeral 20 and made of a material such that reflection is prevented as far as possible. This is possible, for example, by using a matt white lining. The same applies to the lighting 10 which emits light preferably in a diffuse manner, thus preventing reflection. After all, reflection is undesirable in order to be able to clearly recognize the various species of insects.

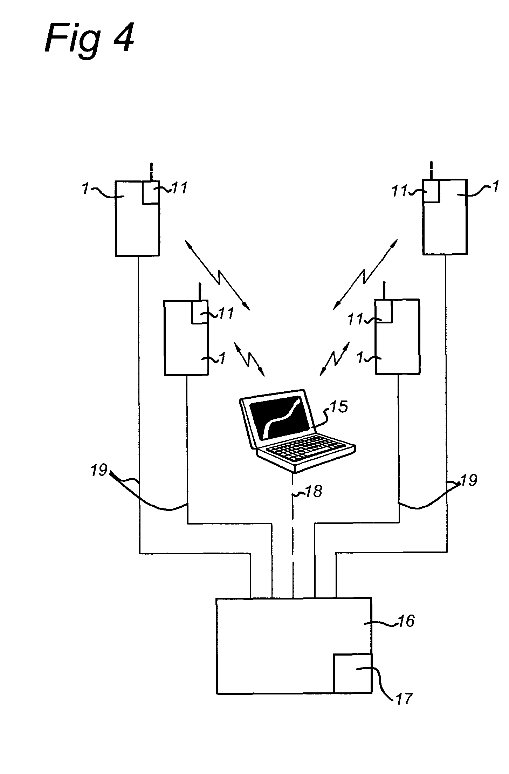

The camera 8 and lighting 10 are powered by a battery 14. The battery 14 also powers a control/processing unit 9 containing software, such as vision software, allowing numbers and species of insects to be concluded from the signal provided by the camera. The results obtained in this way can be sent to, for example, a laptop 15 (see Fig. 4) via the transmitter 11.

Instead of the results, it is also possible to forward the complete imaging which the camera 8 perceives.

Fig. 4 is a schematic view of an arrangement wherein a number of devices described hereinbefore are attached at various sites. Connection to a laptop 15 or other sub-central processing unit is established with the transmitters 11. This laptop 15 may be connected, as is indicated by the broken line 18, to a main central processing unit 16. It is also possible to directly connect each device to the main central processing unit, as is indicated by solid lines 19. A combination of the connecting methods described hereinbefore is conceivable.

The connection between the laptop 15 and the main central processing unit 16 or the direct connection between the devices 1 and the main central processing unit, respectively, will be carried out, wirelessly or non-wirelessly, preferably via the Internet.

The main central processing unit is arranged preferably in a laboratory or other central site.

It is possible to examine, that is to say to scan, a number of catch plates using one device.

In the example described hereinbefore, data concerning the insect population are forwarded to the laptop 15 via the transmitter 11. These data are collected there and the position of the various devices is also added thereto. This signal is sent to the main central processing unit 16. There, a controller 17 and the knowledge of various desired and other conditions are used to determine whether a specific threshold value with regard to species and number of the insects or development of the species and number of insects, respectively, is exceeded. This threshold value relates both to the numbers of undesirable insects and, as applicable, to the numbers of desired combating insects which get rid of the undesirable insects. In the latter case, dropping below a specific threshold value is a reason to take action. If this threshold value is exceeded, then a signal is issued. Preferably, an expert, who is connected to the main central processing unit, then offers advice to the manager of the space wherein the device 1 is present. That is to say, for a specific space or all spaces, advice will be given to carry out adaptation to the conditions. In the growing of crops, this may include the temperature, humidity, fertilization, lighting, use of pesticides and the like. When determining the insect population in a greenhouse, the laptop is used preferably at greenhouse level. In this case, devices 1 are attached in the various greenhouse spaces. A device 1 may be used for monitoring various sub-spaces in a specific part of the greenhouse.

As stated hereinbefore, a device 1 may be used for monitoring catch plates located in various positions in the greenhouse space in question. The user need merely introduce the catch plate into the device, after which the catch plate is read off on site. Subsequently, he can return the catch plate to the desired position or attach a new catch plate. The device can be transported at higher weight, for example on a (tube) bogey, or be embodied so as to be fully portable. This allows a large number of catch plates to be read by comparatively untrained staff using a single device, the reading being evaluated elsewhere by trained staff, possibly following automatic monitoring. If these data are collected carefully, it is possible to issue, if the threshold value described hereinbefore is locally exceeded, detailed advice which can extend to a surface area of just square metres. That is to say, it is possible to intervene immediately right at the onset of, for example, a certain plague.

This is a major advantage of the invention over the prior art in which not all catch plates are regularly monitored and action was taken, with the concomitant considerable effort, only once there were large quantities of undesirable insects.

In addition, it is possible to develop, with the data which reach the main central processing unit, statistically optimum conditions. This data can be used to limit the effort for causing crops to grow and/or to increase the yield thereof.

After reading the foregoing description, the person skilled in the art will immediately think of variants which come under the scope of the accompanying claims.

## Claims

1. Combination comprising a device (1) for determining the number of insects (12) present on a catch plate and a series of catch plates, wherein said device comprises a housing (2) provided with an insertion opening (3) for receiving one of said catch plates (5), an observation surface (13) lying after said insertion opening, a camera (6) which is directed toward said observation surface and arranged in said housing, said camera being embodied for scanning objects lying on that observation surface such as a catch plate, a control and processing unit (9) in said housing, which controls the functioning of said camera and processes the signal originating from the camera, wherein said insertion opening (3) is embodied for the reception, in the closed position of said housing (2), of a catch plate (5) so as to be removable through said openings (3), said catch plates being attached at various locations and each of them can be received by said device.

2. Combination according to Claim 1, wherein said device comprises a transmitter (11) which sends the signal, obtained by the control and processing unit, to a further processing unit (15, 16).

3. Combination according to one of the preceding claims, wherein said insertion opening (3) of said device is formed in proximity to an end delimitation of said housing.

4. Combination according to one of the preceding claims, wherein a battery (14) is arranged in said housing for supplying power to the components located in said housing.

5. Combination according to one of the preceding claims, wherein said camera comprises a scanner.

6. Combination according to one of the preceding claims, wherein said camera (6) comprises a camera which is sensitive to infrared light.

7. Combination according to one of the preceding claims, wherein the signal obtained is processed immediately and is shown on a display.

8. Combination according to one of the preceding claims, wherein a circumferential frame (6) stabilizing the catch plate is provided for said catch plate.

9. Combination according to Claim 8, wherein that circumferential frame (6) is part of said catch plate.

10. Combination according to one of Claims 8 or 9, wherein said device (1) comprises an insertion construction for a catch plate, which insertion construction comprises the stabilizing circumferential frame.

11. Combination according to one of Claims 8-10, wherein the catch plate is used on two sides.

12. Method for determining a number of insects present at various sites of a space, including defining, at each site using in each case a catch plate processing unit, the number and species of insects, defining, using a scanning, control and processing unit at the site of each catch plate, the information present on the catch plate, sending the information originating from said control and processing unit to a central processing unit (16), determining in said central processing unit whether a threshold value with regard to the number and/or species of insects is exceeded and issuing a signal when said threshold value is exceeded, which signal comprises the site in said space, wherein a number of catch plates is used in combination with a single catch plate processing unit.

13. Method according to Claim 12, wherein said central processing unit comprises more than two sub-central processing units (15) which are connected to a main central processing unit (16) via the Internet.

14. Method according to one of Claims 12 or 13, wherein said space comprises a greenhouse.

## Patentansprüche

1. Kombination, umfassend eine Vorrichtung (1) zur Bestimmung der Anzahl von Insekten (12), die auf einer Fangplatte und einer Reihe von Fangplatten anwesend sind, wobei die Vorrichtung ein Gehäuse (2), versehen mit einer Einsetzöffnung (3) zur Aufnahme einer der Fangplatten (5), eine nach der Einsetzöffnung liegende Beobachtungsfläche (13), eine auf die Beobachtungsfläche gerichtete und in dem Gehäuse angeordnete Kamera (6) zum Scannen von Objekten, die auf der Beobachtungsfläche wie beispielsweise einer Fangplatte liegen, eine Steuer- und Prozesseinheit (9) in dem Gehäuse, die den Betrieb der Kamera steuert und das von der Kamera ausgehende Signal verarbeitet, umfasst, wobei die Einsetzöffnung (3) in der geschlossenen Position des Gehäuses (2) für die Aufnahme einer Fangplatte (5) geeignet ist, sodass diese durch die Öffnungen (3) herausnehmbar ist, wobei die Fangplatten an verschiedenen Stellen befestigt sind und jede von ihnen durch die Vorrichtung aufgenommen werden kann.

2. Kombination nach Anspruch 1, wobei die Vorrichtung einen Transmitter (11) umfasst, der das von der Steuer- und Prozesseinheit empfangene Signal an eine weitere Prozesseinheit (15, 16) sendet.

3. Kombination nach einem der vorhergehenden Ansprüche, wobei die Einsetzöffnung (3) der Vorrichtung nahe einer Endbegrenzung des Gehäuses gebildet wird.

4. Kombination nach einem der vorhergehenden Ansprüche, wobei eine Batterie (14) in dem Gehäuse angeordnet ist, um die in dem Gehäuse befindlichen Komponenten mit Strom zu versorgen.

5. Kombination nach einem der vorhergehenden Ansprüche, wobei die Kamera einen Scanner umfasst.

6. Kombination nach einem der vorhergehenden Ansprüche, wobei die Kamera (6) eine Kamera umfasst, die empfindlich auf Infrarotlicht reagiert.

7. Kombination nach einem der vorhergehenden Ansprüche, wobei das erhaltene Signal sofort verarbeitet und im Display angezeigt wird.

8. Kombination nach einem der vorhergehenden Ansprüche, wobei ein Umfangrahmen (6), der die Fangplatte stabilisiert, für die Fangplatte bereitgestellt wird.

9. Kombination nach Anspruch 8, wobei der Umfangrahmen (6) Teil der Fangplatte ist.

10. Kombination nach einem der Ansprüche 8 oder 9, wobei die Vorrichtung (1) eine Einsetzkonstruktion für jede Fangplatte umfasst und die Einsetzkonstruktion den stabilisierenden Umfangrahmen umfasst.

11. Kombination nach einem der Ansprüche 8-10, wobei die Fangplatte auf zwei Seiten verwendet wird.

12. Verfahren zur Bestimmung einer Anzahl von Insekten, die an verschiedenen Orten eines Raums anwesend sind, umfassend das Definieren der Anzahl und der Gattung der Insekten an jedem Ort unter Verwendung von in jedem Fall einer Fangplatten-Prozesseinheit, das Definieren der auf der Fangplatte anwesenden Information unter Verwendung einer Scan-, Steuer- und Prozesseinheit am Ort jeder Fangplatte, das Senden der von der Steuer- und Prozesseinheit kommenden Information an einen Hauptprozessor (16), das Bestimmen in dem Hauptprozessor, ob ein Schwellwert in Bezug auf die Anzahl und/oder die Gattung der Insekten überschritten ist, und das Ausgeben eines Signals, wenn der Schwellwert überschritten ist, welches Signal den Ort in dem Raum umfasst, wobei eine Anzahl von Fangplatten in Kombination mit einer einzelnen Fangplatten-Prozesseinheit verwendet wird.

13. Verfahren nach Anspruch 12, wobei der Hauptprozessor mehr als zwei Subprozesseinheiten (15) umfasst, die über das Internet mit einem Hauptprozessor (16) verbunden sind.

14. Verfahren nach einem der Ansprüche 12 oder 13, wobei der Raum ein Treibhaus umfasst.

## Revendications

1. Combinaison comprenant un dispositif (1) pour déterminer le nombre d'insectes (12) présents sur une plaque de capture et une série de plaques de capture, dans laquelle ledit dispositif comprend un boîtier (2) doté d'une ouverture d'insertion (3) pour recevoir l'une desdites plaques de capture (5), une surface d'observation (13) se trouvant après ladite ouverture d'insertion, une caméra (6) qui est dirigée vers ladite surface d'observation et agencée dans ledit boîtier, ladite caméra étant mise en oeuvre pour balayer des objets se trouvant sur cette surface d'observation telle que la plaque de capture, une unité de commande et de traitement (9) dans ledit boîtier, qui commande le fonctionnement de ladite caméra et traite le signal provenant de la caméra, dans laquelle ladite ouverture d'insertion (3) est mise en oeuvre pour la réception, dans la position fermée dudit boîtier (2), d'une plaque de capture (5) afin de pouvoir être retirée par lesdites ouvertures (3), lesdites plaques de capture étant fixées à différents emplacements et chacune d'entre elles peuvent être reçue par ledit dispositif.

2. Combinaison selon la revendication 1, dans laquelle ledit dispositif comprend un émetteur (11) qui envoie le signal, obtenu par ladite unité de commande et de traitement, à une autre unité de traitement (15, 16).

3. Combinaison selon l'une quelconque des revendications précédentes, dans laquelle ladite ouverture d'insertion (3) dudit dispositif est formée à proximité d'une délimitation d'extrémité dudit boîtier.

4. Combinaison selon l'une des revendications précédentes, dans laquelle une batterie (14) est agencée dans ledit boîtier pour fournir de l'électricité aux composants situés dans ledit boîtier.

5. Combinaison selon l'une des revendications précédentes, dans laquelle ladite caméra comprend un scanner.

6. Combinaison selon l'une des revendications précédentes, dans laquelle ladite caméra (6) comprend une caméra qui est sensible à la lumière infrarouge.

7. Combinaison selon l'une des revendications précédentes, dans laquelle le signal obtenu est traité immédiatement et est représenté sur un écran.

8. Combinaison selon l'une des revendications précédentes, dans laquelle un bâti circonférentiel (6) stabilisant la plaque de capture est prévu pour ladite plaque de capture.

9. Combinaison selon la revendication 8, dans laquelle le bâti circonférentiel (6) fait partie de ladite plaque de capture.

10. Combinaison selon l'une des revendications 8 ou 9, dans laquelle ledit dispositif (1) comprend une construction d'insertion pour une plaque de capture, laquelle construction d'insertion comprend le bâti circonférentiel de stabilisation.

11. Combinaison selon l'une des revendications 8 à 10, dans laquelle la plaque de capture est utilisée des deux côtés.

12. Procédé pour déterminer un nombre d'insectes présents à différents sites d'un espace, comprenant les étapes consistant à définir, sur le site de capture en utilisant dans chaque cas, une unité de traitement de plaque de capture, le nombre et l'espèce des insectes, définir en utilisant une unité de balayage, de commande et de traitement sur le site de chaque plaque de capture, l'information présente sur la plaque de capture, envoyer l'information provenant de ladite unité de commande et de traitement à une unité de traitement centrale (16), déterminer dans ladite unité de traitement centrale si une valeur de seuil par rapport au nombre et/ou aux espèces d'insectes est dépassée et produire un signal lorsque ladite valeur de seuil est dépassée, lequel signal comprend le site dans ledit espace, dans lequel un certain nombre de plaques de capture est utilisé en combinaison avec une seule unité de traitement de plaque de capture.

13. Procédé selon la revendication 12, dans lequel ladite unité de traitement centrale comprend plus de deux unités de traitement auxiliaires (15) qui sont raccordées à une unité de traitement centrale principale (16) via Internet.

14. Procédé selon l'une des revendications 12 ou 13, dans lequel ledit espace comprend une serre.
